# EUROPÄISCHE PATENTANMELDUNG

(11) **EP 4 759 540 A1**
(43) Veröffentlichungstag der Anmeldung: **17.06.2026**
(21) Anmeldenummer: 25215163.4
(22) Anmeldetag: 12.11.2025
(51) Int. Cl.: B32B 43/00, B65H 18/00

(54) **VERFAHREN UND VORRICHTUNG ZUM ABZIEHEN VON SCHUTZFOLIEN VON PLATTEN**

(30) Priorität: 10.12.2024 DE 102024136974
(71) Anmelder: REHAU Industries SE & Co. KG, 95111 Rehau (DE)
(72) Erfinder: SCHUMACHER, Reinhard, 33615 Bielefeld (DE)

(57) **Zusammenfassung**

Die vorliegende Erfindung betritt ein Verfahren und eine Vorrichtung zum Abziehen von Schutzfolien von Platten.

Um die Plattenoberfläche beim Folienabziehvorgang bestmöglich zu schützen und die Schutzfolie rückstandsfrei abzuziehen, umfasst das erfindungsgemäße Verfahren die folgenden Schritte:
• Schritt A: Fördern einer mit einer Folie (F) überzogenen Platte (P), vorzugsweise liegend in einer horizontalen Förderebene.
• Schritt B: Greifen der Folie (F).
• Schritt C: Abziehen der Folie (F) von der Platte (P).
• Schritt D: Aufwickeln der Folie (F) aus einem teilweise oder vollständig abgezogenen Zustand.
• Schritt E: Ausgeben der aufgewickelten Folie (F).

Die Erfindung umfasst außerdem eine entsprechende Vorrichtung (1).

## Beschreibung

Die vorliegende Erfindung betritt ein Verfahren und eine Vorrichtung zum Abziehen von Schutzfolien von Platten.

Ein solches Verfahren und eine solche Vorrichtung sind aus WO 2018/007960 A1 bzw. EP 3481633 B1 bekannt.

Bei der bekannten Lösung wird die Schutzfolie von großformatigen Kunststoffplatten an einer zu bearbeitenden Oberfläche unmittelbar vor der Bearbeitung maschinell entfernt.

Die abgezogenen Folienabschnitte werden unmittelbar aufgewickelt.

Da Abschnitte der aufgewickelten Folie noch mit der Platte verbunden sind, wird die Folie beim Abziehen ggf. ungleichmäßig auf Zug beansprucht, wobei die Folienabzieh-geschwindigkeit und/oder der Folienabziehwinkel während des Folienabziehvorgangs schwanken kann/können.

In Folge dessen können beim Folienabziehvorgang - ähnlich wie beim intermittierenden Abrollen eines Klebebands von einer Rolle - sichtbare Spuren auf der Plattenoberfläche zurückbleiben, die ggf. eine nachfolgende Plattenbearbeitung (z.B. Lackieren) beeinträchtigen.

Zudem können mit der bekannten Lösung weniger als 2 Arbeitstakte pro Minute realisiert werden, weil die Folienabziehgeschwindigkeit durch die Folienaufwickelgeschwindigkeit limitiert wird.

Der vorliegenden Erfindung liegt die Aufgabe zugrunde, die aus dem Stand der Technik bekannte Lösung dahingehend zu verbessern, dass die Plattenoberfläche beim Folienabziehvorgang bestmöglich geschützt wird und die Schutzfolie rückstandsfrei abgezogen wird.

Zur Lösung dieser Aufgabe offenbart die vorliegende Erfindung das Verfahren nach Anspruch 1 und die Vorrichtung nach Anspruch 8.

Offenbart ist ein Verfahren zum Abziehen einer Schutzfolie von einer Platte, umfassend die Schritte:
a. Schritt A: Fördern einer mit einer Folie überzogenen Platte, vorzugsweise liegend in einer horizontalen Förderebene, bevorzugt in einer linearen Förderrichtung.
b. Schritt B: Greifen der Folie, vorzugsweise an einem in Förderrichtung vorstehenden Abschnitt.
c. Schritt C: Abziehen der Folie von der Platte (teilweise oder vollständig), vorzugsweise nach oben, bevorzugt unter Bildung eines rechten Winkels oder eines spitzen Winkels entgegen der Förderrichtung.
d. Schritt D: Aufwickeln der Folie aus einem teilweise oder vollständig abgezogenen Zustand, vorzugsweise aus einem hängenden Zustand, in welchem die Folie bevorzugt, vollständig ausgebreitet ist.
e. Schritt E: Ausgeben der aufgewickelten Folie.

Die Schritte A werden vorzugsweise für jede weitere Platte wiederholt.

Im Unterschied zu dem aus dem Stand der Technik bekannten Verfahren werden bei einer erfindungsgemäßen Lösung die Schritte C und D teilweise oder vollständig voneinander entkoppelt. Idealerweise wird die Folie zuerst vollständig abgezogen, bevor sie aus einem vollständig abgezogenen Zustand aufgewickelt wird.

Durch Trennen dieser beiden Schritte C und D kann die Folie zunächst mit einer besonders gleichmäßigen und hohen Folienabziehgeschwindigkeit abgezogen werden, ohne dass dieser Schritt durch einen überlagerten Folienaufwickelvorgang beeinträchtigt wird.

Gerade beim Aufwickeln der Folie kann es zu Schwankungen in der Folienabzieh-geschwindigkeit oder beim Folienabziehwinkel kommen, was sich an der empfindlichen Oberfläche der Platte, die mit der abzuziehenden Schutzfolie überzogen ist, in Form von störenden Rückständen abzeichnet. Diese Rückstände können die nachfolgende Bearbeitung der empfindlichen Plattenoberfläche beeinträchtigen.

Es ist aber auch möglich, dass sich die Schritte C und D teilweise überlappen.

Dabei kann die Folie beim Abziehvorgang aufgewickelt werden. Die Antriebe der für die Schritte C und D zuständigen Einrichtungen (Greifeinrichtung und Wickeleinrichtung) sind frequenzgesteuert und sind dadurch aufeinander abstimmbar.

Mit der erfindungsgemäßen Lösung werden die beschriebenen Nachteile vermieden. Vorteilhafte Weiterbildungen sind Gegenstände der abhängigen Ansprüche.

Es kann von Vorteil sein, wenn die Platte bei Ausführung der Schritte A, B und C kontinuierlich in Förderrichtung gefördert wird, vorzugsweise in derselben Förderrichtung. Dadurch kann die Folie besonders gleichmäßig und unter Vermeidung von Schwankungen in der Folienabziehgeschwindigkeit und/oder im Folienabziehwinkel abgezogen werden.

Es kann sinnvoll sein, wenn die Platte mit einer konstanten Fördergeschwindigkeit gefördert wird, wobei die Fördergeschwindigkeit vorzugsweise im Bereich von 10 bis 100 m/min, bevorzugt im Bereich von 20 bis 80 m/min, besonders bevorzugt im Bereich von 30 bis 50 m/min liegt. Bei einer derartigen Fördergeschwindigkeit kann ein Optimum zwischen Durchsatz und Prozesssicherheit erreicht werden.

Es kann sich als nützlich erweisen, wenn die Folie in Schritt B an einem über die Platte vorstehenden Abschnitt, vorzugsweise an einem in Förderrichtung vorstehenden Abschnitt, bevorzugt an einem Klebestreifen, der an einer die Platte überziehenden Folienschicht angebracht ist, gegriffen wird. Das Greifen der Folie an einem in Förderrichtung vorstehenden Abschnitt, der ober- und unterseitig zugänglich ist, erleichtert den nachfolgenden Abziehvorgang, weil dann kein die Platte überziehender Folienabschnitt gegriffen werden muss, der nur oberseitig zugänglich ist. Ein Greifen der Folie an einem die Platte überziehenden Folienabschnitt könnte das Risiko erhöhen, dass die Folie möglicherweise nicht korrekt oder vollständig gegriffen wird und somit der Abziehvorgang fehlerhaft ausgeführt wird.

Es kann von Vorteil sein, wenn die Folie in Schritt C nach oben abgezogen wird, vorzugsweise in einem konstanten Folienabziehwinkel und/oder mit einer konstanten Folienabziehgeschwindigkeit, wobei die Folienabziehgeschwindigkeit bevorzugt identisch zur Fördergeschwindigkeit der Platte in Förderrichtung ist. Diese Maßnahme erweist sich in Vorbereitung des nachfolgenden Wickelvorgangs als besonders zielführend. Bei Förderung der Platte in horizontal liegender Anordnung ist die Oberseite der Platte für den Folienabziehvorgang zugänglich.

Es kann sich als hilfreich erweisen, wenn die Folie in Schritt D aus einem vertikal hängenden Zustand aufgewickelt wird, vorzugsweise um eine horizontale Wickelachse. In diesem Zustand kann die flexible und instabile Folie für den nachfolgenden Wickelvorgang mit einem Minimum an Hilfsmitteln, nämlich alleine durch die Greifeinrichtung, vollständig ausgebreitet und somit ideal angeordnet werden.

Es kann praktisch sein, wenn die Wickelachse der vollständig aufgewickelten Folie in Schritt E gedreht wird, vorzugsweise um eine parallel zur Förderrichtung der Platte ausgerichtete Drehachse, bevorzugt um 90° nach unten, und die aufgewickelte Folie mit vertikal ausgerichteter Wickelachse ausgegeben wird. Diese Maßnahme erleichtert die Ausgabe der aufgewickelten Folie, weil die Folie mit vertikal ausgerichtete Wickelachse unter dem Einfluss der Schwerkraft leicht von einer Wickeleinrichtung abgestreift werden kann.

Ein weiterer unabhängiger Aspekt der vorliegenden Erfindung betrifft eine Vorrichtung zum Abziehen von Schutzfolien von Platten, vorzugsweise unter Ausführung des Verfahrens nach einer der vorangehenden Ausführungen, umfassend:
a. Eine Fördereinrichtung, um eine mit einer Folie überzogene Platte zu fördern, vorzugsweise liegend in einer horizontalen Förderebene, bevorzugt in einer linearen Förderrichtung.
b. Eine Greifeinrichtung, um die Folie vorzugsweise klemmend zu greifen, bevorzugt an einem in Förderrichtung vorstehenden Abschnitt, und um die Folie (teilweise oder vollständig) von der Platte abzuziehen.
c. Eine Wickeleinrichtung, um die von der Platte teilweise oder vollständig abgezogene Folie aufzuwickeln und um die aufgewickelte Folie auszugeben.

Für die Vorrichtung gelten im Wesentlichen dieselben Vorteile wie für das vorstehend genannte Verfahren.

Es kann von Nutzen sein, wenn die Vorrichtung mindestens zwei Funktionseinheiten mit je einer solchen Greifeinrichtung und einer solchen Wickeleinrichtung aufweist, wobei die Funktionseinheiten vorzugsweise unabhängig voneinander betätigbar sind, sodass die Wickeleinrichtung einer ersten Funktionseinheit die Schutzfolie einer ersten Platte aufwickeln kann, während die Greifeinrichtung einer zweiten Funktionseinheit die Schutzfolie einer zweite Platte abziehen kann, wobei die Funktionseinheiten bevorzugt an derselben Fördereinrichtung in Förderrichtung hintereinander angeordnet sind.

Mit einer solchen Vorrichtung können die Taktzeiten erheblich verkürzt werden und die Anzahl der Arbeitstakte pro Minute kann deutlich erhöht werden. Mit zwei solcher Funktionseinheiten, die an derselben Fördereinrichtung in Förderrichtung hintereinander angeordnet sind, sind beispielsweise drei, vier oder fünf Arbeitstakte pro Minute möglich.

Es kann sinnvoll sein, wenn die Greifeinrichtung wenigstens zwei (sich vorzugsweise quer zur Förderrichtung erstreckende) Klemmbacken aufweist, um einen Folienabschnitt klemmend zu greifen. Bei dieser Ausführung kann die Folie für den nachfolgenden Abziehvorgang sicher und zuverlässig gegriffen werden.

Es kann vorteilhaft sein, wenn die Greifeinrichtung zwischen einer Folienaufnahmekonfiguration, in welcher die Klemmbacken geöffnet und einer Schmalseite (z.B. der Vorderkante) der Platte zugewandt sind, um einen über die Schmalseite (vorzugsweise in Förderrichtung) vorstehenden Folienabschnitt klemmend zu greifen, und einer Folienabziehkonfiguration, in welcher die Klemmbacken über der Förderebene der Platte liegend geschlossen und einer Oberseite der Platte zugewandt sind, sodass die Platte unter den geschlossenen Klemmbacken hindurch gefördert werden kann, überführbar ist, wobei die Greifeinrichtung bevorzugt in der Folienabziehkonfiguration exakt oder im Wesentlichen vertikal nach oben bewegbar ist, um die Folie vollständig von der Platte abzuziehen, bevorzugt mit einer konstanten Folienabziehgeschwindigkeit, wobei die Folienabzieh-geschwindigkeit besonders bevorzugt der Fördergeschwindigkeit der Platte in Förderrichtung entspricht.

Die Folienaufnahmekonfiguration erweist sich als besonders hilfreich, um den in Förderrichtung vorstehenden Folienabschnitt besonders einfach ober- und unterseitig klemmend zu greifen. Dabei werden die geöffneten Klemmbacken mit in der Förderebene liegender Teilungsebene so positioniert, dass die Schutzfolie der in Förderrichtung geförderten Platte in der Teilungsebene der Klemmbacken quasi in die geöffneten Klemmbacken hineinläuft. Anschließend werden die Klemmbacken unverzüglich geschlossen, um den in Förderrichtung vorstehenden Folienabschnitt ober- und unterseitig klemmend zu greifen. Unmittelbar danach wird die Greifeinrichtung aus der Folienaufnahmekonfiguration in die Folienabziehkonfiguration überführt, sodass die geschlossenen Klemmbacken mit dem klemmend gegriffenen Folienabschnitt der Förderbewegung der Platte ausweichen und die Platte unter den geschlossenen Klemmbacken hindurch gefördert werden kann.

Dabei wird die Greifeinrichtung um eine quer zur Förderrichtung in Förderebene ausgerichtete Kippachse um 90° nach oben und hinten gekippt, sodass die Teilungsebene der Klemmbacken exakt oder im Wesentlichen senkrecht zur Förderebene der Platte angeordnet ist und die geschlossenen Klemmbacken der Plattenoberseite zugewandt sind. Bei dieser Kippbewegung der Klemmbacken wird der von den geschlossenen Klemmbacken klemmend gegriffene Folienabschnitt um 90° nach oben geklappt und somit im rechten Winkel zur Plattenoberfläche ausgerichtet. Beim anschließenden Folienabziehvorgang wird die Folie somit in ihrer Erstreckungsebene mit einer vorzugsweise konstanten Zugkraft belastet, was die Gefahr eines Folienversagens während des Folienabziehvorgangs minimiert.

Es kann zweckdienlich sein, wenn die Wickeleinrichtung konfiguriert ist, um die Folie aus einem vertikal hängenden Zustand aufzuwickeln, vorzugsweise um eine horizontale Wickelachse. Aus einem vertikal hängenden Zustand, in welchem die Folie vollständig ausgebreitet ist, lässt sich die abgezogene Folie besonders einfach und faltenfrei aufwickeln.

Es kann sich als hilfreich erweisen, wenn die Wickeleinrichtung mindestens zwei um eine Wickelachse drehbare Wickelstäbe aufweist, wobei die Wickeleinrichtung zwischen einer Wickelkonfiguration, in welcher die Wickelstäbe horizontal und parallel zueinander ausgerichtet sind und vorzugsweise an beiden Enden drehbar um die Wickelachse gelagert sind, und einer Ausgabekonfiguration, in welcher die Wickelstäbe mit verringertem Abstand vertikal und parallel zueinander ausgerichtet sind und vorzugsweise nur am oberen Ende gelagert sind, während das untere Ende zur Ausgabe der aufgewickelten Folie, vorzugsweise unter dem Einfluss der Schwerkraft und/oder einer Abstreifeinrichtung, z.B. in Gestalt eines Dorns, der beim Überführen der Wickeleinrichtung von der Wickelkonfiguration in die Folienausgabekonfiguration oder in der Folienausgabekonfiguration von oben zwischen den Wickelstäben in die aufgewickelte Folie F eingeführt und sich nach unten bewegen kann, freiliegt, überführbar ist.

Es kann nützlich sein, wenn die Vorrichtung eine Umlenkeinrichtung aufweist, mit welcher die Folie beim Abziehen von der Platte in einem vorgegebenen Folienabziehwinkel zwischen der Platte und der Greifeinrichtung gespannt wird, wobei die Umlenkeinrichtung vorzugsweise als eine die Fördereinrichtung überquerende Umlenkrolle ausgebildet ist, unter welcher die zwischen Platte und Greifeinrichtung gespannte Folie abrollend hindurchläuft. Eine derartige Umlenkeinrichtung begünstigt den Folienabziehvorgang unter Einhaltung eines konstanten Folienabziehwinkels.

Es kann von Vorteil sein, wenn die Umlenkeinrichtung, insbesondere zur Veränderung des Folienabziehwinkels, verstellbar ist. Dadurch kann z.B. je nach Folienstärke oder Plattendicke in Abhängigkeit von der gewählten Folienabziehgeschwindigkeit ein gewünschter Folienabziehwinkel eingestellt werden.

Weitere vorteilhafte Ausführungen ergeben sich durch Kombinationen der in den Ansprüchen, den Ausführungsbeispielen und den Figuren offenbart Merkmalen.

### Begriffe und Definitionen

### Platte

Der Begriff Platte bezieht sich auf Platten im engeren Sinne, aber auch auf plattenförmige oder plattenähnliche Objekte. Wenngleich das vorliegenden Ausführungsbeispiel großformatige, rechteckige Kunststoffplatten betrifft, bestehen im Hinblick auf die Form und Abmessungen sowie auf den Werkstoff der Platte grundsätzlich keine Einschränkungen. Vorzugsweise bewegen sich die Abmessungen der Platte in den folgenden Bereichen:
Dicke: 0,5 bis 20 mm
Breite: 200 bis 2.000 mm, vorzugsweise 500 bis 1.500 mm, bevorzugt 1.200 bis 1.400 mm
Länge: 1.000 bis 5.000 mm, vorzugsweise 2.000 bis 4.000 mm, bevorzugt 3.000 bis 3.500 mm, besonders bevorzugt 3.200 mm.

Es kann sich z.B. um Platten mit rundem, ovalem, kreisförmigem, polygonalem wie z.B. rechteckigen Umriss handeln. Die Platte kann aus Holz und/oder Kunststoff und/oder Metall oder dergleichen gefertigt sein. Die Platte kann ein oder mehrere Schichten aufweisen. Der Begriff Platte soll daher, soweit nicht explizit definiert, keine Einschränkungen im Hinblick auf Form, Abmessungen oder Werkstoff implizieren, sondern grundsätzlich alle plattenförmigen, plattenartigen oder plattenähnliche Objekte bzw. Körper umfassen, die ein- oder beidseitig mit einer abzuziehenden Schutzfolie überzogen sein können.

### Folie

Der Begriff Folie bezieht sich auf Folien im engeren Sinne, aber auch auf folienähnliche oder folienartige Objekte. Die Folie ist vorzugsweise flexibel.

Die Dicke der Folie ist vorzugsweise geringer als die Dicke der Platte.

Die Dicke der Folie liegt beispielsweise im Bereich von 0,02 bis 5 mm.

Die Folie kann die Platte teilweise oder vollständig überziehen.

Die Folie kann aus Papier und/oder Kunststoff und/oder Metall oder dergleichen gefertigt sein. Die Folie kann eine oder mehrere Schichten aufweisen. Der Begriff Folie soll daher, soweit nicht explizit definiert, keine Einschränkungen im Hinblick auf die Form, die Abmessungen oder den Werkstoff implizieren, sondern grundsätzlich alle Folien sowie folienähnliche oder folienartige Objekte bzw. Körper umfassen, die eine Platte überziehen können, soweit die Folie grundsätzlich nach den hier offenbarten Prinzipien von der Platte abgezogen werden kann.

Zur Erleichterung des Greifens und Abziehens der Folie kann ein die Platte überziehender Folienabschnitt an dem in Förderrichtung vorderen Ende mit einem die Vorderkante überdeckenden Klebestreifen versehen sein. Der Klebestreifen hat beispielsweise eine Breite von 30 mm und überdeckt den die Platte überziehenden Folienabschnitt entlang der Vorderkante der Platte auf einer Breite von 15 mm, wobei der Klebestreifen entlang der Vorderkante der Platte mit einer Breite von 15 mm in Förderrichtung über die Vorderkante bzw. das vordere Ende der Platte vorsteht. Dieser Klebestreifen bildet eine Schicht der Schutzfolie, welche die Platte nicht vollständig überzieht, aber mit dem die Platte überziehenden Folienabschnitt wirkverbunden ist, um das Greifen und Abziehen der Folie zu erleichtern.

### Kurze Beschreibung der Figuren

Es zeigen:
- Fig. 1:: eine computergenerierte Perspektivansicht einer erfindungsgemäßen Vorrichtung zum Abziehen von Schutzfolien von Platten, umfassend eine Fördereinrichtung, eine Greifeinrichtung mit zwei Klemmbacken zum Greifen eines Folienabschnitts und zum Abziehen der Folie, eine Wickeleinrichtung mit zwei Wickelstäben zum Aufwickeln der abgezogenen Folie und zum Ausgeben der aufgewickelten Folie, sowie eine verstellbare Umlenkrolle zum Umlenken der zwischen Greifeinrichtung und Platte gespannten Folie in einem vorgegebenen Folienabziehwinkel.
- Fig. 2:: die Vorrichtung aus Fig. 1, wobei eine folienüberzogene Platte in Förderrichtung zu einer Foliengreifposition gefördert wird, in welcher die Greifeinrichtung in einer Folienaufnahmekonfiguration konfiguriert ist, um einen in Förderrichtung der Platte vorstehenden Folienabschnitt klemmend zu greifen.
- Fig. 3:: die Vorrichtung aus Fig. 2, wobei die Greifeinrichtung ausgehend von der Folienaufnahmekonfiguration um 90° um eine horizontale Achse nach oben geklappt und in eine Folienabziehkonfiguration überführt worden ist sowie vertikal nach oben bewegt ist, wobei die Platte ausgehend von der Foliengreifposition weiter in Förderrichtung bewegt worden ist und die Folie in einem spitzen Winkel entgegen der Förderrichtung unter einer Umlenkrolle hindurchläuft und zwischen Platte und Greifeinrichtung gespannt ist.
- Fig. 4:: die Vorrichtung aus Fig. 3 in einem Zustand, in welchem die Folie vollständig von der Platte abgezogen ist und vertikal hängend von der Greifeinrichtung zwischen den horizontal und parallel zueinander ausgerichteten Wickelstäben der Wickeleinrichtung herabhängt, wobei sich die Wickelstäbe in etwa vom unteren Folienende auf 1/3 der Länge der Folie befinden.
- Fig. 5:: die Vorrichtung aus Fig. 4 in einem Zustand, in welchem die Folie teilweise auf den Wickelstäben aufgewickelt ist, wobei die Greifeinrichtung sich in Abstimmung auf die Wickelbewegung der Wickeleinrichtung aus der obersten Position abgesenkt hat.
- Fig. 6:: die Vorrichtung aus Fig. 5 in einem Zustand, in welchem die Folie vollständig auf den Wickelstäben aufgewickelt ist und sich die Greifeinrichtung in Abstimmung auf die Wickelbewegung der Wickeleinrichtung aus der obersten Position auf eine Position etwas oberhalb der Wickelstäbe abgesenkt hat, wobei das Widerlager der Wickelstäbe auf einer Seite entfernt ist, sodass die Wickelachse der aufgewickelten Folie gekippt werden kann.
- Fig. 7:: die Vorrichtung aus Fig. 6 in einem Zustand, in welchem die Wickelstäbe mit der aufgewickelten Folie um eine parallel zur Förderrichtung der Platte ausgerichtete Achse in etwa um 45° nach unten gekippt sind.

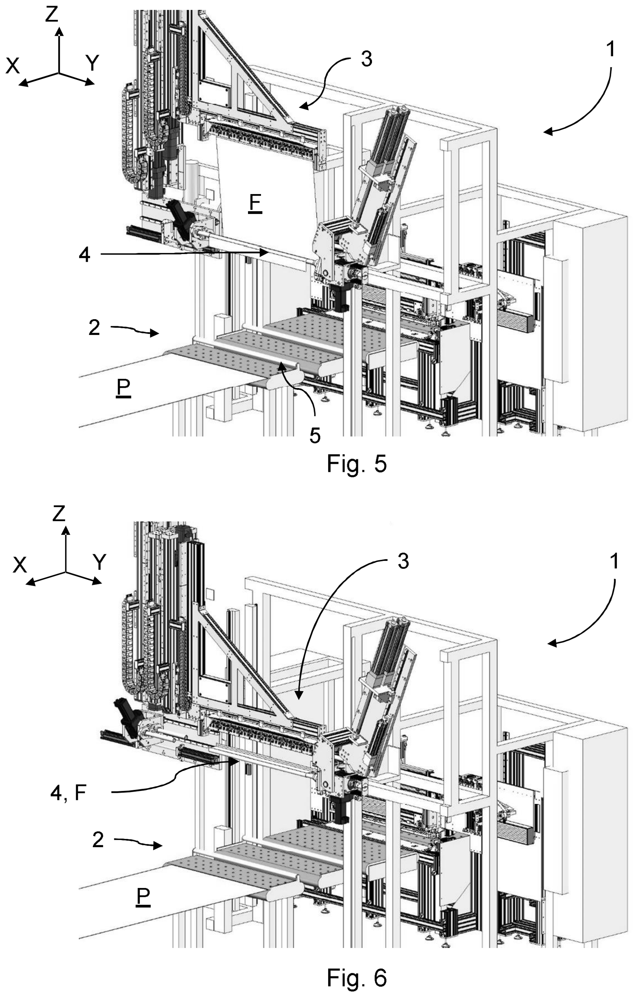

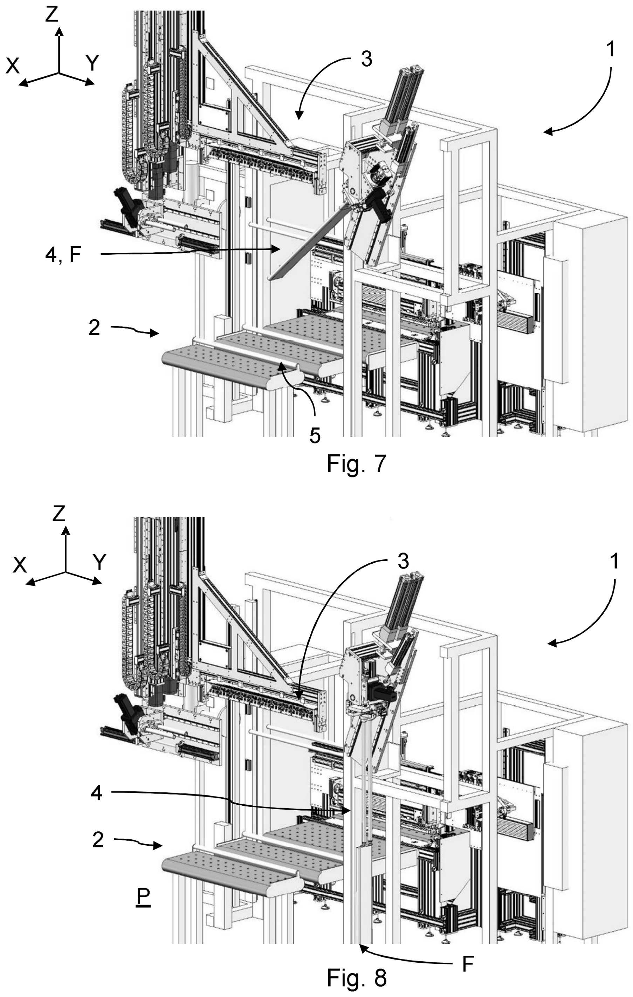

- Fig. 8:: die Vorrichtung aus Fig. 7 in einem Zustand, in welchem die Wickelstäbe ausgehend von der in Fig. 6 dargestellten Wickelanordnung um 90° nach unten gekippt sind und die Wickelstäbe vertikal ausgerichtet sind, wobei der Abstand der Wickelstäbe im Vergleich zu der in Fig. 6 dargestellten Wickelanordnung verringert ist, sodass die aufgewickelte Folie entlang der Wickelachse unter dem Einfluss der Schwerkraft nach unten abgestreift werden kann, wobei eine Abstreifeinrichtung in Gestalt eines Dorns zwischen den Wickelstäben in die Folienwicklung eingeführt werden kann, um sich nach unten zu bewegen und die Folienwicklung von den Wickelstäben abzustreifen.
- Fig. 9: bis 16: die Vorrichtung aus den Fig. 1 bis 8 aus anderer Perspektive.
- Fig. 17: bis 19: Detailansichten der Vorrichtung aus den Fig. 1 bis 3
- Fig. 20:: eine Detailansicht der Vorrichtung aus Fig. 2 und 18.
- Fig. 21:: die Vorrichtung aus Fig. 20, wobei die Greifeinrichtung aus der Folienaufnahmekonfiguration in die Folienabziehkonfiguration überführt worden ist.
- Fig. 22:: eine Detailansicht der Vorrichtung aus Fig. 3 und 19.
- Fig. 23:: eine Detailansicht der Vorrichtung aus Fig. 3 und 19, wobei die Greifeinrichtung in der Folienabziehkonfiguration nach oben zwischen zwei Wickelstäben der Wickeleinrichtung hindurchgeführt worden ist.
- Fig. 24:: eine Detailansicht der Vorrichtung aus Fig. 23, wobei die vollständig abgezogene Folie unter Drehung der Wickelstäbe um eine zu den Wickelstäben parallele und zwischen den Wickelstäben liegenden Wickelachse aufgewickelt wird.
- Fig. 25:: eine Detailansicht der Vorrichtung aus Fig. 24, wobei die Folie um die Wickelstäbe vollständig aufgewickelt ist.

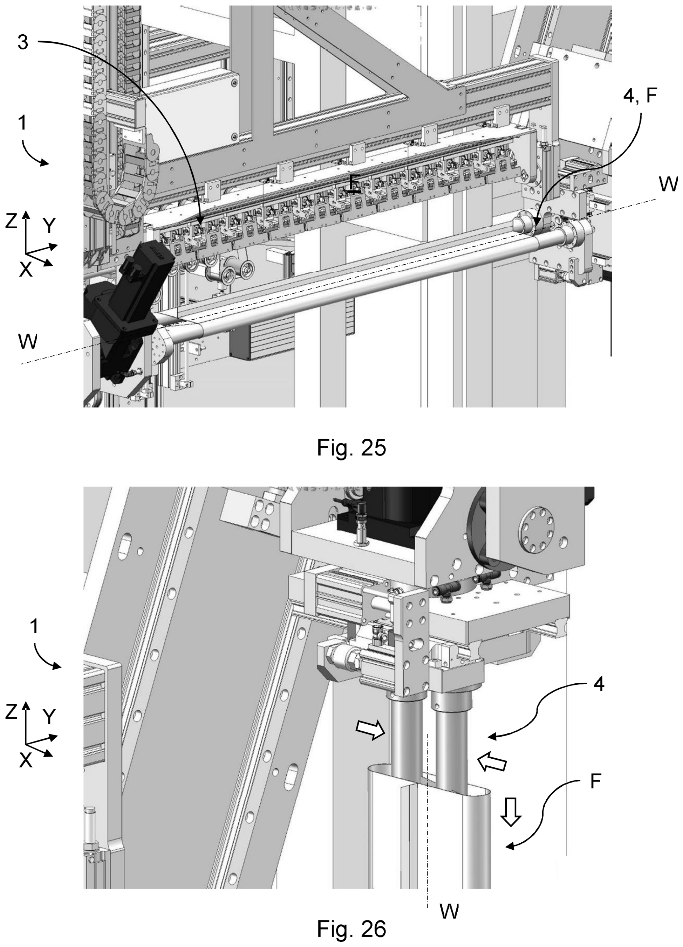

- Fig. 26:: eine Detailansicht der Vorrichtung aus Fig. 25, wobei die Wickelstäbe und die Wickelachse der aufgewickelten Folie nach Entfernen eines Widerlagers der Wickelstäbe um 90° nach unten geschwenkt wurde, wobei der Abstand der Wickelstäbe gegenüber der Wickelkonfiguration zur Überführung der Wickeleinrichtung in eine Ausgabekonfiguration verringert wurde, sodass die aufgewickelte Folie unter dem Einfluss der Schwerkraft nach unten abgestreift werden kann, wobei eine Abstreifeinrichtung in Gestalt eines Dorns zwischen den Wickelstäben in die Folienwicklung eingeführt werden kann, um sich nach unten zu bewegen und die Folienwicklung von den Wickelstäben abzustreifen.

### Detaillierte Beschreibung des bevorzugten Ausführungsbeispiels

Eine Vorrichtung 1 gemäß dem bevorzugten Ausführungsbeispiel wird nachstehend mit Bezug auf die beiliegenden Figuren im Detail beschrieben.

Im bevorzugten Ausführungsbeispiel ist die Vorrichtung 1 zum Abziehen von Schutzfolien F von großformatigen, rechteckigen Kunststoffplatten P mit einer Länge von ca. 3.200 mm, einer Breite von ca. 1.300mm und einer Dicke von 0,5-4 mm ausgebildet. Die Platten P werden nach dem Abziehen der Schutzfolie F bestimmungsgemäß einem Lackiervorgang zugeführt. Zur Vermeidung einer Kontamination der freigelegten Plattenoberfläche, beispielsweise infolge einer elektrischen Ladung, die durch Abziehen der Schutzfolie F erzeugt wird, kann das erfindungsgemäße Verfahren unter Schutzatmosphäre bzw. unter Reinraumbedingungen durchgeführt werden. Eine Schutzatmosphäre ist zur Durchführung des Verfahrens aber nicht erforderlich. Die Vorrichtung 1 kann sich auch vorgelagert vor einem Reinraum befinden.

Die Platten P sind oberseitig vollflächig mit einer dünnen und flexiblen Schutzfolie F aus Kunststoff überzogen. An einem in Förderrichtung R führenden bzw. vorderen Ende befindet sich entlang der Vorderkante der Platte P ein Klebestreifen mit einer Breite von ca. 30 mm, der die Schutzfolie F zur Hälfte, d. h. auf einer Breite von ca. 15 mm überdeckt und zur anderen Hälfte, d. h. auf einer Breite von ca. 15 mm in Förderrichtung R über die Vorderkante der Platte P vorsteht. Der in Förderrichtung R vorstehende Klebestreifen bildet einen Teil bzw. einer Schicht der Folie F und dient dazu, die Schutzfolie F mit der Greifeinrichtung 3 ober- und unterseitig in Eingriff zu nehmen.

### Fördereinrichtung 2

Die Fördereinrichtung 2 ist dazu konfiguriert, um die Platten P in einer horizontalen Förderebene X-Y liegend in Förderrichtung R zu fördern, sodass die mit der Folie F überzogene Oberseite der Platte P nach oben weist. Falls die Platte P auch unterseitig mit Folie F überzogen ist, kann die Platte P gewendet werden und die Vorrichtung 1 erneut durchlaufen.

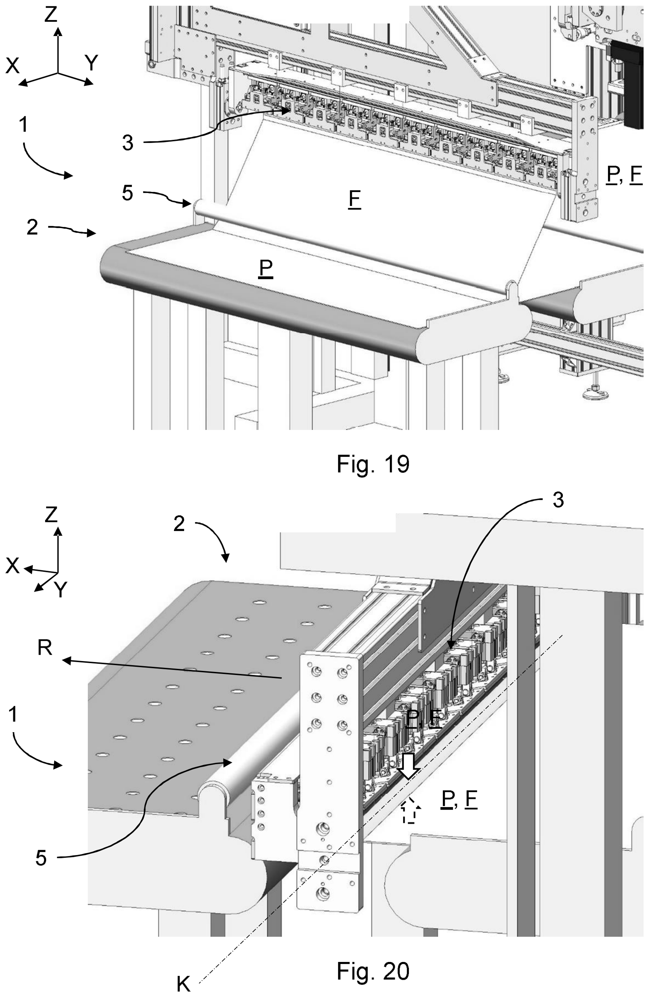

Die Fördereinrichtung 2, die beispielsweise als Vakuumtisch ausgebildet ist und in der Lage ist, die Platte P unter Ausbildung eines Luftpolsters unterhalb der Platte P zu fördern, umfasst keine durchgehende Förderoberfläche, sondern mehrere im Wesentlichen rechteckige bzw. quaderförmige Förderabschnitte, die in Förderrichtung R voneinander beabstandet sind, sodass die Greifeinrichtung 3 in der Folienaufnahmekonfiguration zwischen zwei Förderabschnitten angeordnet werden kann, um den in Förderrichtung R vorstehenden Folienabschnitt klemmend zu greifen (vgl. Fig. 20).

### Greifeinrichtung 3

Die Greifeinrichtung 3 ist dazu konfiguriert, um einen Folienabschnitt klemmend zu greifen, und um die Folie F an diesem Folienabschnitt von der Platte P abzuziehen.

Die Greifeinrichtung 3 ist in vertikaler Richtung Z höhenverstellbar und sich in horizontaler Richtung Y quer über die gesamte Fördereinrichtung 2 erstreckend an einem Querbalken eines Maschinenrahmens montiert. Bestandteil der Greifeinrichtung 3 sind mindestens zwei sich über die gesamte Breite der Fördereinrichtung 2 erstreckende Klemmbacken. Zumindest eine der Klemmbacken kann durch eine Vielzahl von Kolben betätigt werden, z.B. hydraulisch, pneumatisch, mechanisch oder elektronisch (mittels Elektroantrieb). Die Klemmbacken sind um 90° um eine horizontale und quer zur Förderrichtung R ausgerichtete Kippachse K kippbar.

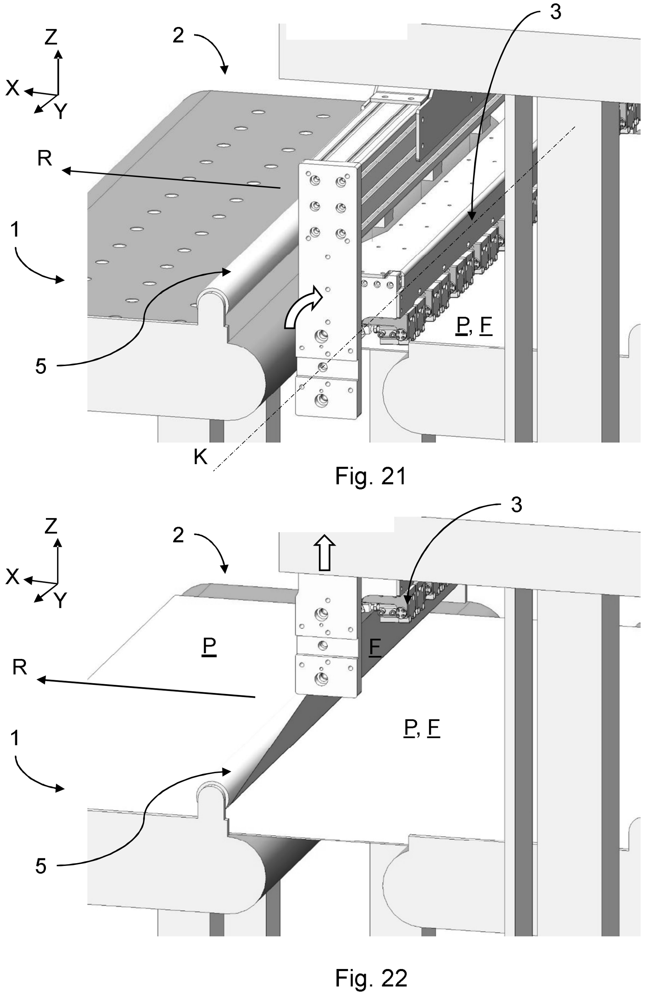

Die Greifeinrichtung 3 ist zwischen einer Folienaufnahmekonfiguration, in welcher die Klemmbacken geöffnet und einer Schmalseite bzw. der Vorderkante der in Förderrichtung R geförderten Platte P zugewandt sind, um einen in Förderrichtung R vorstehenden Folienabschnitt klemmend ober- und unterseitig zu greifen (vgl. Fig. 20), und einer Folienabziehkonfiguration, in welcher die Klemmbacken über der Förderebene der Platte P liegend geschlossen und einer Oberseite der Platte P zugewandt sind, überführbar (vgl. Fig. 21). Die Greifeinrichtung 3 ist in der Folienabziehkonfiguration mit einer regelbaren Folienabziehgeschwindigkeit - entsprechend der Fördergeschwindigkeit der Platte P in Förderrichtung R - nach oben bewegbar, um die Folie F vollständig von der Platte P abzuziehen.

### Wickeleinrichtung 4

Die Wickeleinrichtung 4 ist dazu konfiguriert, um die von der Platte P teilweise oder vollständig abgezogene Folie F aus einem vertikal hängenden Zustand um eine horizontale Wickelachse W aufzuwickeln, um die Wickelachse W der aufgewickelten Folie F zu schwenken bzw. zu drehen und um die aufgewickelte Folie F anschließend mit vertikal ausgerichteter Wickelachse W auszugeben.

Die Wickeleinrichtung 4 umfasst zwei um die Wickelachse W drehbare Wickelstäbe und ist zwischen einer Wickelkonfiguration, in welcher die Wickelstäbe horizontal und parallel zueinander ausgerichtet sind und an beiden Enden drehbar um die Wickelachse W gelagert sind, und einer Ausgabekonfiguration, in welcher die Wickelstäbe mit verringertem Abstand vertikal und parallel zueinander ausgerichtet sind und nur am oberen Ende gelagert sind, während das untere Ende zur Ausgabe der aufgewickelten Folie F unter dem Einfluss der Schwerkraft freiliegt, überführbar.

Um ein Durchbiegen der Wickelstäbe unter dem Gewicht der Folie F zu vermeiden, sind die Wickelstäbe in der Wickelkonfiguration an beiden Enden gelagert, um die gesamte Breite der Fördereinrichtung 1 und Folie F zu überspannen. Dazu umfasst die Wickeleinrichtung 4 eine bewegbare Lageranordnung, welche die Wickelstäbe in der Wickelkonfiguration an den freien bzw. unteren Enden lagert und unterstützt.

Zur Überführung der Wickeleinrichtung 4 in die Ausgabekonfiguration kann die Lageranordnung von den freien bzw. unteren Enden der Wickelstäbe entfernt werden, sodass die aufgewickelte Folie F in der Ausgabekonfiguration unter dem Einfluss der Schwerkraft nach unten abgestreift werden kann. Das Abstreifen der aufgewickelten Folie F kann durch eine Abstreifeinrichtung, z.B. in Gestalt eines Dorns, unterstützt werden.

Der Dorn kann zwischen den Wickelstäben in die Folienwicklung eingeführt werden, um sich nach unten zu bewegen und die Folienwicklung von den Wickelstäben abzustreifen.

Bei Rücküberführung der Wickeleinrichtung 4 in die Wickelkonfiguration wird/werden auch die Lageranordnung und/oder die Abstreifeinrichtung wieder in eine Position gebracht, um die Folie F der nächsten Platte P mit der Wickeleinrichtung aufzuwickeln bzw. abzustreifen.

### Umlenkeinrichtung 5

Die Umlenkeinrichtung 5 ist dazu konfiguriert, um die Folie F beim Abziehen von der Platte P in einem vorgegebenen Folienabziehwinkel zwischen der Platte P und der Greifeinrichtung 3 zu spannen. Dazu ist die Umlenkeinrichtung 5 als eine die Fördereinrichtung 2 überquerende Umlenkrolle ausgebildet, unter welcher die zwischen Platte P und Greifeinrichtung 3 gespannte Folie F abrollend hindurchläuft.

Zur Veränderung des Folienabziehwinkels sowie zur Anpassung der Umlenkeinrichtung 5 an verschiedene Platten- oder Folienstärken ist die Umlenkeinrichtung 5 in Z-Richtung vertikal verstellbar.

### Mehrere Funktionseinheiten

Die in den Figuren dargestellte Vorrichtung 1 umfasst zwei identische Funktionseinheiten, die an derselben Fördereinrichtung 2 in Förderrichtung R hintereinander angeordnet sind und die jeweils eine solche Greifeinrichtung 3 und eine solche Wickeleinrichtung 4 aufweisen.

Die beiden Funktionseinheiten sind unabhängig voneinander betätigbar, sodass die Wickeleinrichtung 4 einer in Förderrichtung R vorderen bzw. stromabwärts gelegenen, ersten Funktionseinheit die Schutzfolie F einer ersten Platte P noch aufwickeln kann, während die Greifeinrichtung 3 einer zweiten in Förderrichtung R hinteren bzw. stromaufwärts gelegenen Funktionseinheit bereits mit dem Abziehen der Schutzfolie F der Platte P beginnt.

Dadurch kann die zweite (hintere) Funktionseinheit bereits die Bearbeitung einer weiteren Platte P aufnehmen, während die erste (vordere) Funktionseinheit noch mit dem Folienaufwickelvorgang belegt ist.

Wird dann auf der zweiten (hinteren) Funktionseinheit der Folienaufwickelvorgang ausgeführt, kann bereits eine weitere Platte P zur ersten (vorderen) Funktionseinheit gefördert werden, um den Folienabziehvorgang erneut zu beginnen. Das ist möglich, weil die Folie F vor dem Aufwickeln vollständig von der Platte P abgezogen wird. So wird die eine Funktionseinheit nicht durch den zeitaufwändigen Folienaufwickelvorgang auf der anderen Funktionseinheit "blockiert".

Jede der beiden Greifeinrichtungen 3 ist dabei in der Folienaufnahmekonfiguration in einem Spalt der Fördereinrichtung 2 anordenbar. Da die zweite Funktionseinheit in derselben Weise funktioniert wie die erste Funktionseinheit, wird auf eine gesonderte Beschreibung der zweiten Funktionseinheit verzichtet und auf die vorangehende Beschreibung der ersten Funktionseinheit verwiesen.

### Verfahren

Das Verfahren nach dem bevorzugten Ausführungsbeispiel wird bestimmungsgemäß auf der Vorrichtung 1 gemäß dem bevorzugten Ausführungsbeispiel ausgeführt und wird nachstehend mit Bezug auf die beiliegenden Figuren im Detail beschrieben.

In Schritt A des erfindungsgemäßen Verfahrens wird die mit der Folie F überzogene Platte P horizontal liegend in einer Förderebene X-Y in Förderrichtung R auf der Fördereinrichtung 2 gefördert. Der Klebestreifen, welcher den die Platte P überziehenden Folienabschnitt an der Plattenvorderkante überdeckt und damit einen Teil der Folie F bildet, steht dabei um ca. 15 mm in Förderrichtung R über die Vorderkante der Platte P hervor.

In Schritt B, dem sog. Folienaufnahmevorgang, wird die Greifeinrichtung 3 zunächst in die Folienaufnahmekonfiguration überführt und in dem Spalt zwischen zwei Förderabschnitten der Fördereinrichtung 2 angeordnet, wie in Fig. 20 im Detail dargestellt.

In der Folienaufnahmekonfiguration sind die Klemmbacken geöffnet, wobei deren Teilungsebene horizontal in bzw. parallel zur X-Y-Ebene ausgerichtet ist und mit der Förderebene der Platte P zusammenfällt.

Dadurch kann die Greifeinrichtung 3 den in Förderrichtung R vorstehenden Abschnitt der Folie F klemmend in Eingriff nehmen, wenn sich Platte P in Förderrichtung R in die Nähe der Greifeinrichtung 3 bewegt und mit dem in Förderrichtung R vorstehenden Klebestreifen voran in die Aufnahme zwischen den Klemmbacken eindringt.

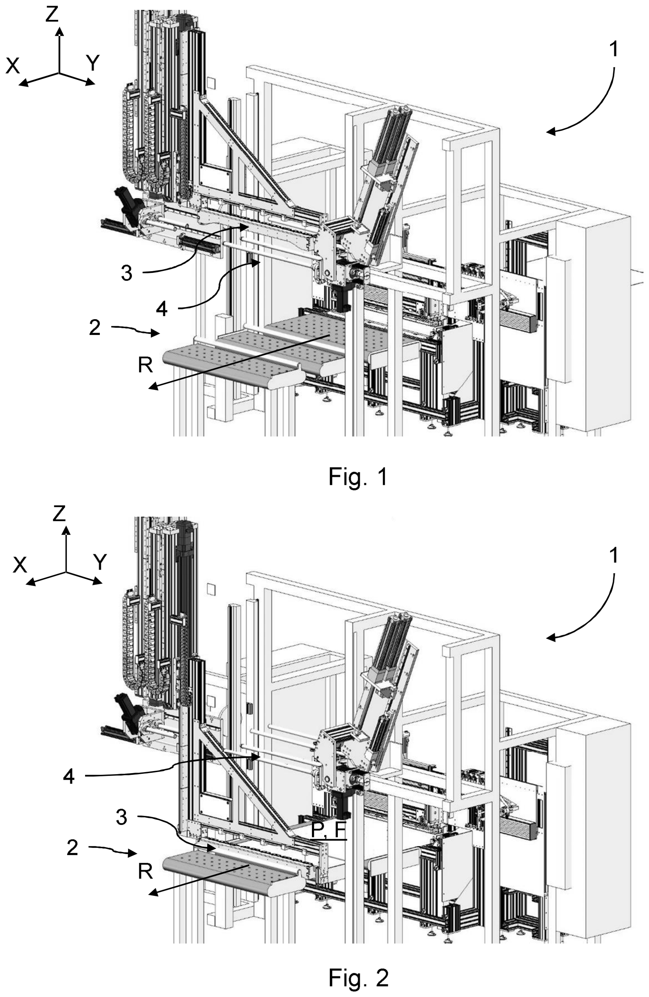

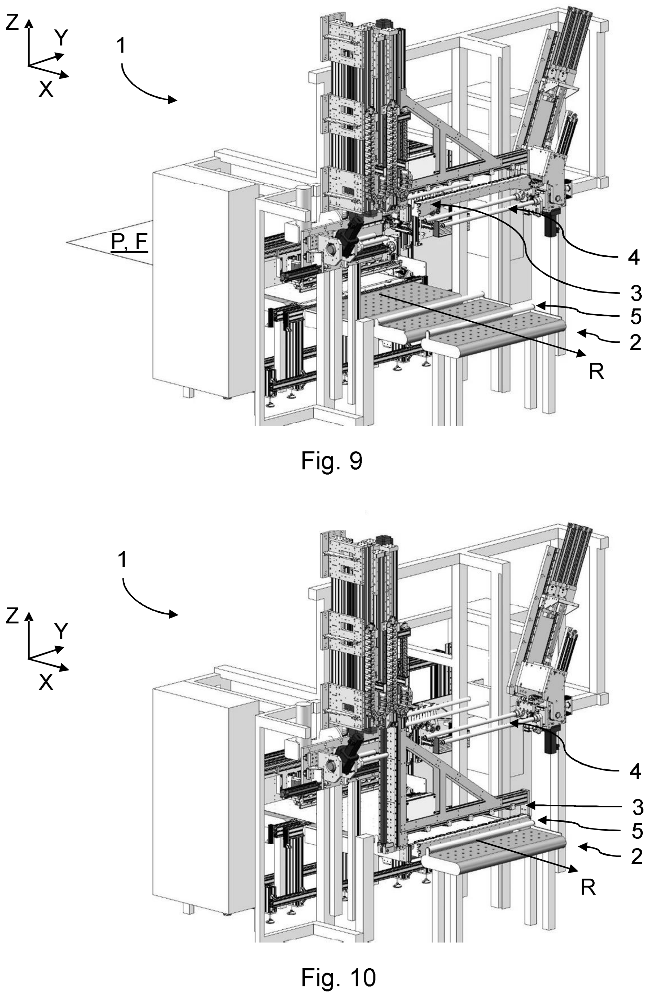

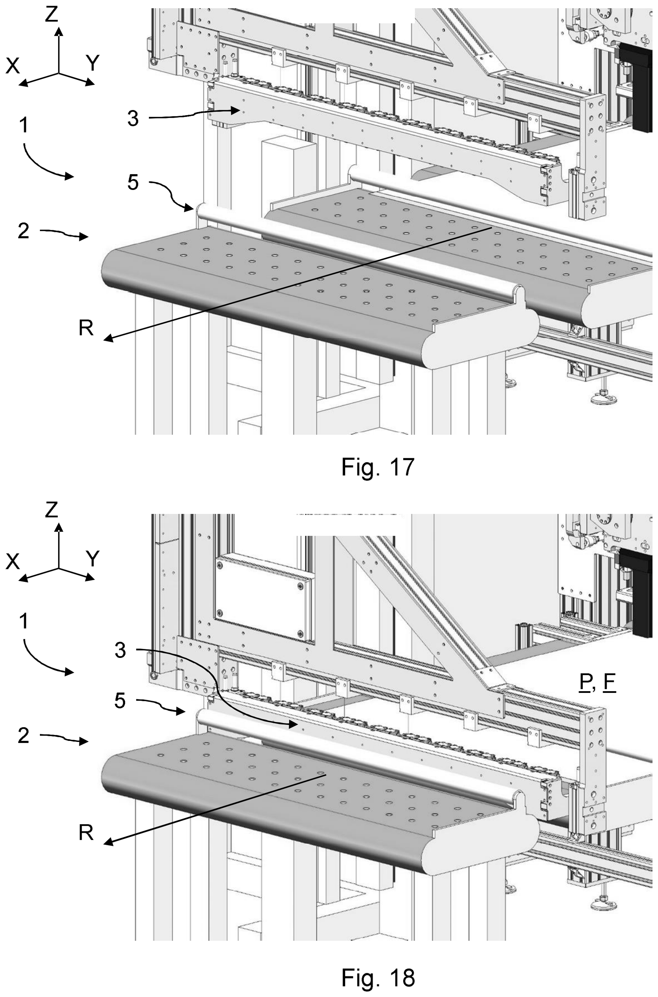

Nach dem Schließen der beiden Klemmbacken wird die Greifeinrichtung 3 um 90° um die Kippachse K entgegen der Förderrichtung R nach oben gekippt, wie in Fig. 21 dargestellt, sodass der zwischen den Klemmbacken gehaltene Folienabschnitt bzw. Klebestreifen exakt oder im Wesentlichen vertikal nach oben weist. Infolge der Kippbewegung wird die Greifeinrichtung 3 über die Förderebene X-Y angehoben, sodass die auf der Fördereinrichtung 2 geförderte, folienüberzogene Platte P unter den geschlossenen Klemmbacken hindurch gefördert werden kann (vgl. Fig. 2/3; 10/11; 18/19 und insbesondere 20/21).

Da die Platte P während der Schritte A bis C kontinuierlich gefördert wird, stehen der Greifeinrichtung 3 zum Greifen des Folienabschnitts sowie zur Überführung in die Folienabziehkonfiguration nur wenig Zeit zur Verfügung.

In dieser sogenannten Folienabziehkonfiguration ist die Teilungsebene der Klemmbacken der Greifeinrichtung 3 vertikal in bzw. parallel zur Y-Z-Ebene ausgerichtet, wie in Fig. 21 dargestellt. Ausgehend von dem in Fig. 21 dargestellten Zustand wird die Greifeinrichtung 3 dann in Schritt C, dem sog. Folienabziehvorgang, anschließend mit der entsprechenden Tragvorrichtung in vertikaler Richtung Z am Maschinenrahmen mit konstanter Folienabziehgeschwindigkeit entsprechend der Vorschubgeschwindigkeit der Platte P auf der Fördereinrichtung 2 nach oben bewegt.

Die Folie F wird dabei in einem spitzen Winkel, der vorzugsweise zwischen 45° und 90° liegt, entgegen der Förderrichtung R unter einer Umlenkrolle 5 hindurchgeführt, wie in Fig. 22 dargestellt, und damit in konstantem Folienabziehwinkel und mit konstanter Folienabzieh-geschwindigkeit vollständig von der Platte P abgezogen.

Der Abstand der Umlenkrolle 5 zur Förderebene XY ist verstellbar, sodass durch Änderung der Höhe der Umlenkrolle 5 der Folienabziehwinkel verändert werden kann.

Durch Höhe der Umlenkrolle 5 kann aber auch der Folienabziehwinkel an Platten P unterschiedlicher Dicke angepasst werden.

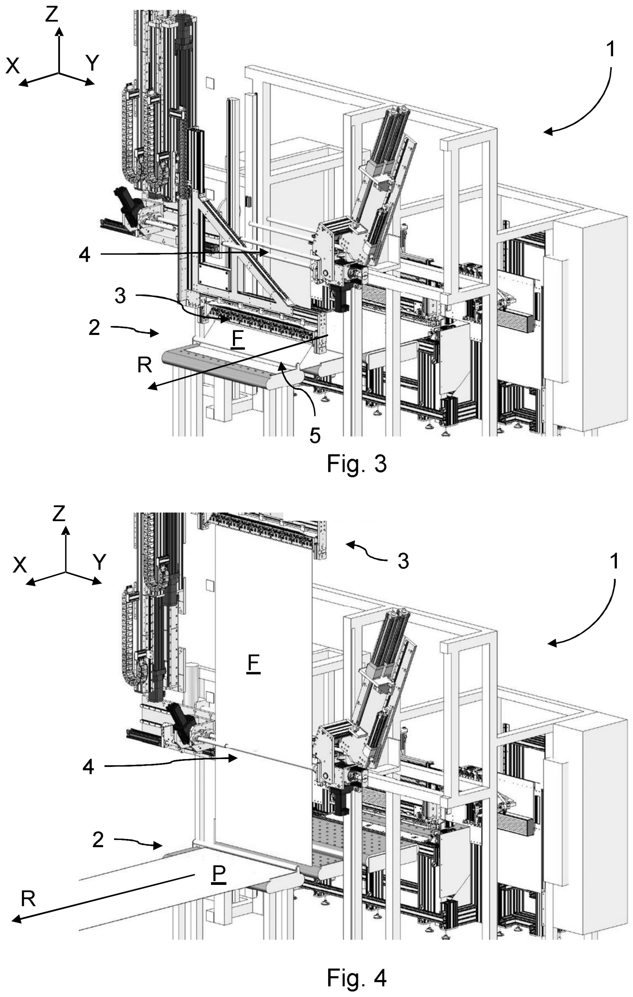

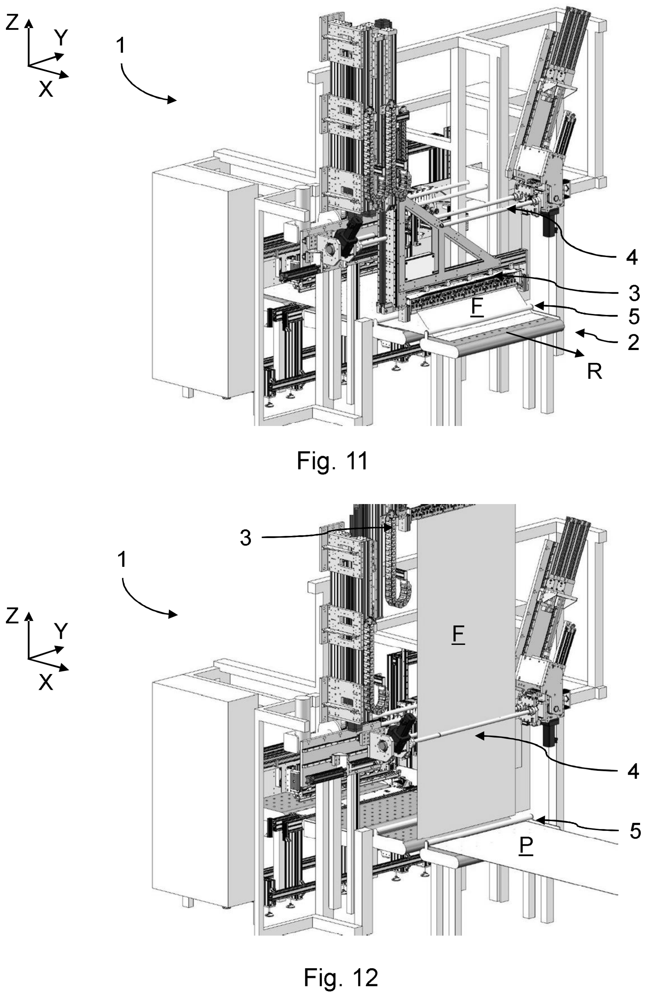

Figur 4 und 12 zeigen beispielsweise einen Zustand am Ende des Schrittes C, in welchem die Folie F vollständig von der Platte P abgezogen ist und vollständig ausgebreitet vertikal in einer Y-Z Ebene von der Greifeinrichtung 3 zwischen den beiden sich quer in Y-Richtung über die Fördereinrichtung 2 erstreckenden Wickelstäben der Wickeleinrichtung 4 herabhängt.

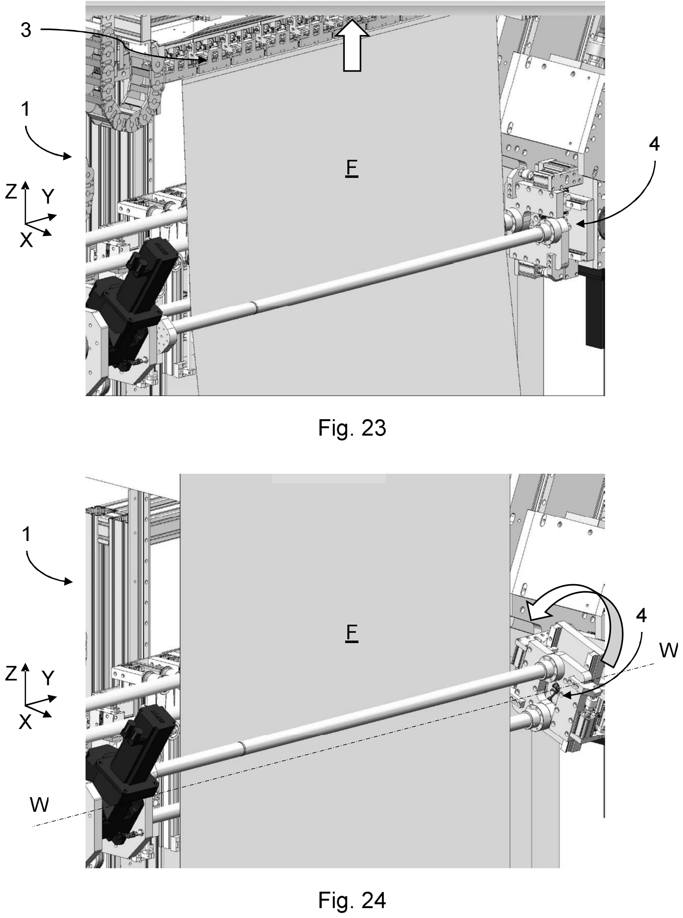

Ausgehend von diesem in Fig. 4 und 12 dargestellten Zustand wird die Folie F in Schritt D durch Drehung der beiden Wickelstäbe der Wickeleinrichtung 4 um eine parallel zu den Wickelstäben ausgerichtete und zwischen den Wickelstäben liegende Wickelachse W aufgewickelt, wie in Fig. 24 dargestellt.

Die Wickeleinrichtung 4 befindet sich dabei in der sog. Wickelkonfiguration, in welcher beide Wickelstäbe der Wickeleinrichtung 4 parallel horizontal in Y-Richtung quer über die Fördereinrichtung 1 verlaufen und an beiden Enden gelagert sind. In einem vollständig aufgewickelten Zustand, wie in Fig. 25 dargestellt, ist die Folie F zwischen den beiden Wickelstäben gespannt und die Wickelachse W ist horizontal quer zur Förderrichtung R, d. h. in oder parallel zur Y-Richtung ausgerichtet.

In einem abschließenden Schritt **E,** dem sog. Folienausgabevorgang, wird nach dem vollständigen Aufwickeln der Folie F die Wickeleinrichtung 4 zunächst aus der Wickelkonfiguration in die Folienausgabekonfiguration überführt.

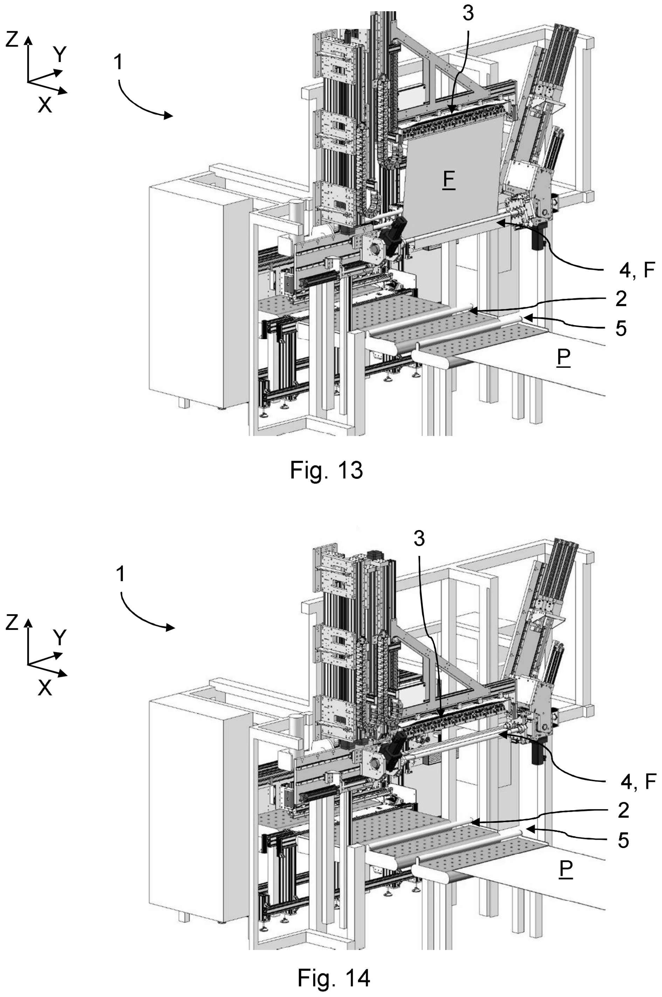

Dabei wird einseitig eine das Widerlager der Wickelstäbe bildende Lageranordnung entfernt, wie z.B. in Fig. 6 und 14 zu erkennen ist.

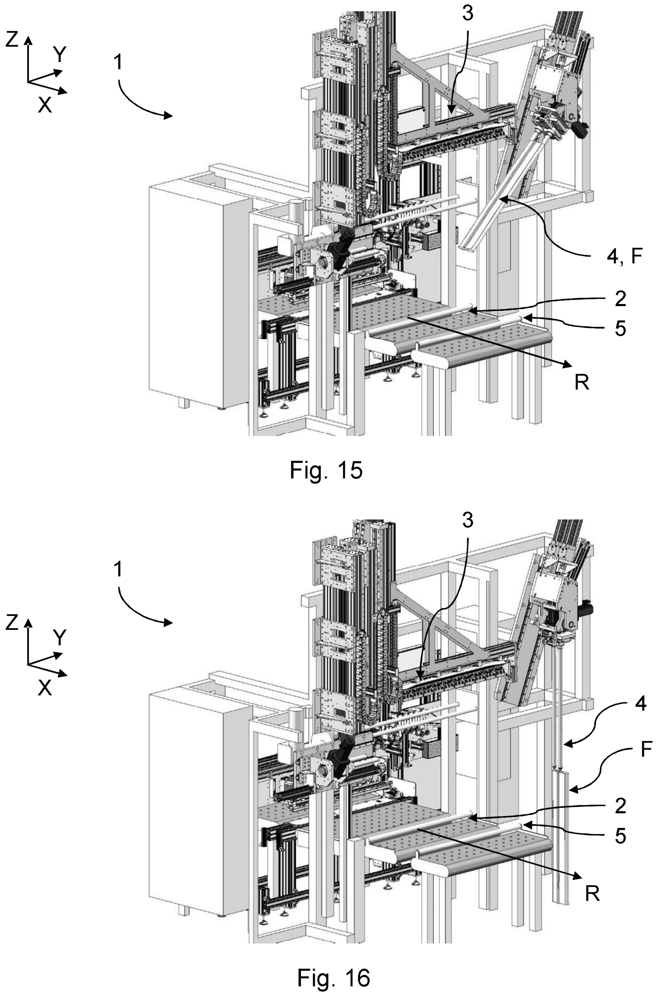

Anschließend werden die beiden Wickelstäbe mit der aufgewickelten Folie F um eine parallel zur Förderrichtung R ausgerichtete Achse um 90° nach unten geklappt, bis die Wickelstäbe und die Wickelachse W vertikal ausgerichtet sind, wie in der Abfolge der Fig. 6-8 und 14-16 dargestellt ist.

Bei vertikaler Ausrichtung der Wickelstäbe und der Wickelachse wird der Abstand der Wickelstäbe verringert, wie in Figur 26 durch Pfeile angedeutet.

Die aufgewickelte Folie F wird dann in vertikaler Richtung nach unten entlang der Wickelachse W unterstützt durch die Schwerkraft und eine Abstreifeinrichtung in Gestalt eines Dorns, der z.B. beim Überführen der Wickeleinrichtung von der Wickelkonfiguration in die Folienausgabekonfiguration (oder in der Folienausgabekonfiguration) zwischen den Wickelstäben von oben in die Folienwicklung eingeführt wird und sich nach unten bewegt, von den Wickelstäben abgestreift werden. Unterhalb der Wickelstäbe kann die abgestreifte Folie F z.B. von einem Förderband (nicht dargestellt) aufgenommen und abtransportiert werden.

Nach dem Abstreifen der aufgewickelten Folie F wird die Wickeleinrichtung 4 wieder aus der Folienausgabekonfiguration in die Wickelkonfiguration überführt, um die Schritte D und E bei einer weiteren Platte P bzw. der davon abgezogenen Folie F zu wiederholen.

Zudem wird die Greifeinrichtung 3 wieder aus der Folienabziehkonfiguration in die Folienaufnahmekonfiguration überführt, um die Schritte B und C bei einer weiteren Platte P zu wiederholen.

Aufgrund der beiden unabhängig betätigbaren Funktionseinheiten können die Schritte B/C sowie D/E auf den beiden Funktionseinheiten simultan bzw. zeitversetzt ausgeführt werden, um den Durchsatz der erfindungsgemäßen Vorrichtung zu erhöhen.

### Bezugszeichenliste

- 1: Vorrichtung
- 2: Fördereinrichtung
- 3: Greifeinrichtung
- 4: Wickeleinrichtung
- 5: Umlenkrolle
- F: Folie
- K: Kippachse (Greifeinrichtung)
- P: Platte
- R: Förderrichtung
- W: Wickelachse (Wickeleinrichtung)
- X: X-Achse bzw. Horizontale Richtung (in Förderrichtung)
- Y: Y-Achse bzw. Horizontale Richtung (quer zur Förderrichtung)
- Z: Z-Achse bzw. Vertikale Richtung

## Patentansprüche

1. Verfahren zum Abziehen von Schutzfolien (F) von Platten (P), umfassend die Schritte:
a. Schritt A: Fördern einer mit einer Folie (F) überzogenen Platte (P), vorzugsweise liegend in einer horizontalen Förderebene.
b. Schritt B: Greifen der Folie (F).
c. Schritt C: Abziehen der Folie (F) von der Platte (P).
d. Schritt D: Aufwickeln der Folie (F) aus einem teilweise oder vollständig abgezogenen Zustand.
e. Schritt E: Ausgeben der aufgewickelten Folie (F).

2. Verfahren nach dem vorangehenden Anspruch, **dadurch gekennzeichnet, dass** die Platte (P) bei Ausführung der Schritte A, B und C kontinuierlich in Förderrichtung (R) gefördert wird.

3. Verfahren nach einem der vorangehenden Ansprüche, **dadurch gekennzeichnet, dass** die Platte (P) mit einer konstanten Fördergeschwindigkeit gefördert wird, wobei die Fördergeschwindigkeit vorzugsweise im Bereich von 10 bis 100 m/min, bevorzugt im Bereich von 20 bis 80 m/min, besonders bevorzugt im Bereich von 30 bis 50 m/min liegt.

4. Verfahren nach einem der vorangehenden Ansprüche, **dadurch gekennzeichnet, dass** die Folie (F) in Schritt B an einem über die Platte (P) vorstehenden Abschnitt, vorzugsweise an einem in Förderrichtung (R) vorstehenden Abschnitt, bevorzugt an einem Klebestreifen, der an einem die Platte (P) überziehenden Folienschicht angebracht ist, gegriffen wird.

5. Verfahren nach einem der vorangehenden Ansprüche, **dadurch gekennzeichnet, dass** die Folie (F) in Schritt C nach oben abgezogen wird, vorzugsweise in einem konstanten Folienabziehwinkel und/oder mit einer konstanten Folienabzieh-geschwindigkeit, wobei die Folienabziehgeschwindigkeit bevorzugt identisch zur Fördergeschwindigkeit der Platte (P) in Förderrichtung (R) ist.

6. Verfahren nach einem der vorangehenden Ansprüche, **dadurch gekennzeichnet, dass** die Folie (F) in Schritt D aus einem vertikal hängenden Zustand aufgewickelt wird, vorzugsweise um eine horizontale Wickelachse (W).

7. Verfahren nach einem der vorangehenden Ansprüche, **dadurch gekennzeichnet, dass** die Wickelachse (W) der vollständig aufgewickelten Folie (F) in Schritt E gedreht wird und die aufgewickelte Folie (F) mit vertikal ausgerichteter Wickelachse (W) ausgegeben wird.

8. Vorrichtung (1) zum Abziehen von Schutzfolien (F) von Platten (P), vorzugsweise unter Ausführung des Verfahrens nach einem der vorangehenden Ansprüche, umfassend:
a. Eine Fördereinrichtung (2), um eine mit einer Folie (F) überzogene Platte (P) zu fördern, vorzugsweise liegend in einer horizontalen Förderebene.
b. Eine Greifeinrichtung (3), um die Folie (F) vorzugsweise klemmend zu greifen, bevorzugt an einem in Förderrichtung (R) vorstehenden Abschnitt, und um die Folie (F) von der Platte (P) abzuziehen.
c. Eine Wickeleinrichtung (4), um die von der Platte (P) teilweise oder vollständig abgezogene Folie (F) aufzuwickeln und um die aufgewickelte Folie (F) auszugeben.

9. Vorrichtung (1) nach dem vorangehenden Anspruch, **dadurch gekennzeichnet, dass** die Vorrichtung (1) mindestens zwei Funktionseinheiten mit je einer solchen Greifeinrichtung (3) und einer solchen Wickeleinrichtung (4) aufweist, wobei die Funktionseinheiten vorzugsweise unabhängig voneinander betätigbar sind, sodass die Wickeleinrichtung (4) einer ersten Funktionseinheit die Schutzfolie (F) einer ersten Platte (P) aufwickeln kann, während die Greifeinrichtung (3) einer zweiten Funktionseinheit die Schutzfolie (F) einer zweite Platte (P) abziehen kann, wobei die Funktionseinheiten bevorzugt an derselben Fördereinrichtung (2) in Förderrichtung (R) hintereinander angeordnet sind.

10. Vorrichtung (1) nach einem der beiden vorangehenden Ansprüche, **dadurch gekennzeichnet, dass** die Greifeinrichtung (3) wenigstens zwei Klemmbacken aufweist, um einen Abschnitt der Folie (F) klemmend zu greifen.

11. Vorrichtung (1) nach dem vorangehenden Anspruch, **dadurch gekennzeichnet, dass** die Greifeinrichtung (3) zwischen einer Folienaufnahmekonfiguration, in welcher die Klemmbacken geöffnet und einer Schmalseite der Platte zugewandt sind, um einen über die Schmalseite der Platte (P) vorstehenden Abschnitt der Folie (F) klemmend zu greifen, und einer Folienabziehkonfiguration, in welcher die Klemmbacken über der Förderebene der Platte (P) liegend geschlossen und der Oberseite der Platte (P) zugewandt sind, sodass die Platte (P) unter den Klemmbacken hindurch gefördert werden kann. überführbar ist, wobei die Greifeinrichtung (3) bevorzugt in der Folienabziehkonfiguration exakt oder im Wesentlichen vertikal nach oben bewegbar ist, um die Folie (F) vollständig von der Platte (P) abzuziehen, bevorzugt mit einer konstanten Folienabziehgeschwindigkeit, wobei die Folienabziehgeschwindigkeit besonders bevorzugt der Fördergeschwindigkeit der Platte (P) in Förderrichtung (R) entspricht.

12. Vorrichtung (1) nach einem der vier vorangehenden Ansprüche, **dadurch gekennzeichnet, dass** die Wickeleinrichtung (4) konfiguriert ist, um die Folie (F) aus einem vertikal hängenden Zustand aufzuwickeln, vorzugsweise um eine horizontale Wickelachse (W).

13. Vorrichtung (1) nach einem der fünf vorangehenden Ansprüche, **dadurch gekennzeichnet, dass** die Wickeleinrichtung (4) mindestens zwei um eine Wickelachse (W) drehbare Wickelstäbe aufweist, wobei die Wickeleinrichtung (4) zwischen einer Wickelkonfiguration, in welcher die Wickelstäbe vorzugsweise horizontal und parallel zueinander ausgerichtet sind und vorzugsweise an beiden Enden drehbar um die Wickelachse (W) gelagert sind, und einer Ausgabe-konfiguration, in welcher die Wickelstäbe mit verringertem Abstand vertikal und parallel zueinander ausgerichtet sind und vorzugsweise nur am oberen Ende gelagert sind, während das untere Ende zur Ausgabe der aufgewickelten Folie, bevorzugt unter dem Einfluss der Schwerkraft und/oder einer Abstreifeinrichtung, z.B. in Gestalt eines Dorns, der beim Überführen der Wickeleinrichtung von der Wickelkonfiguration in die Folienausgabekonfiguration oder in der Folienausgabekonfiguration von oben zwischen den Wickelstäben in die aufgewickelte Folie F eingeführt und sich nach unten bewegen kann, freiliegt, überführbar ist.

14. Vorrichtung (1) nach einem der sechs vorangehenden Ansprüche, **dadurch gekennzeichnet, dass** die Vorrichtung (1) eine Umlenkeinrichtung (5) aufweist, mit welcher die Folie (F) beim Abziehen von der Platte (P) in einem vorgegebenen Folienabziehwinkel zwischen der Platte (P) und der Greifeinrichtung (3) gespannt wird, wobei die Umlenkeinrichtung (5) vorzugsweise als eine die Fördereinrichtung (2) überquerende Umlenkrolle ausgebildet ist, unter welcher die zwischen Platte (P) und Greifeinrichtung (3) gespannte Folie (F) abrollend hindurchläuft.

15. Vorrichtung (1) nach dem vorangehenden Anspruch, **dadurch gekennzeichnet, dass** die Umlenkeinrichtung (5), insbesondere zur Veränderung des Folienabziehwinkels, verstellbar ist.
